Europäisches Patentamt

European Patent Office

Office européen des brevets

(19)

(11) Publication number: **0 457 705 A2**

(12)

# EUROPEAN PATENT APPLICATION

(21) Application number: **91480061.0**

(22) Date of filing: **09.04.91**

(51) Int. Cl.$^5$: **G06F 15/40**

(30) Priority: **16.05.90 US 524762**

(43) Date of publication of application:
**21.11.91 Bulletin 91/47**

(84) Designated Contracting States:
**DE FR GB**

(71) Applicant: **INTERNATIONAL BUSINESS MACHINES CORPORATION**
**Armonk, NY 10504 (US)**

(72) Inventor: **Wang, Diana S.**
**13 Creekmore Drive**
**Trophy Club, Texas 76262 (US)**

(74) Representative: **Tubiana, Max et al**
**Compagnie IBM France Département de Propriété Intellectuelle**
**F-06610 La Gaude (FR)**

(54) **Method for contextual search of copied data objects.**

(57)    A method is disclosed for permitting the contextual searching of a data object which has been copied into a library facility within a data processing system. A selected data object is identifying and the requirement for contextual searchability is indicated. Thereafter, a plurality of contextual search indices is automatically created in response to the copying of the selected data object into a library service. In the preferred embodiment of the present invention a user may specify a selected contextual data abstracting program, the location of that program, the particular input parameters to be utilized to control the contextual data abstracting program and the storage location for the subsequently generated contextual indices. These features are then automatically invoked as a result of the copying of the selected data object. In this manner a data object copied into a library facility will be contextually searchable in the same manner as objects originally filed therein.

EP 0 457 705 A2

## 1. Field of the Invention:

The present invention relates in general to the field of data processing systems and in particular to methods for contextual searching of data objects within a data processing system. Still more particularly the present invention relates to methods for permitting the contextual searching of data objects copied into a library facility from another location within a data processing facility.

## 2. Description of the Prior Art:

Contextual searching of data objects within a data processing system is known in the art. Contextual search engines may be utilized to create a plurality of contextual search indices which may be used to search multiple data objects.

Generally, a plurality of documents within a data processing system may be searched contextually by the provision of a contextual search service which is utilized to analyze the query made by the user and automatically search through a document to locate a particular phrase, word or group of words. In this manner, many database systems provide a technique whereby a large number of documents filed electronically may be scanned to locate those documents which refer to a particular subject matter. Additionally, it is not uncommon to create a contextual search index upon the original filing of a document within a electronic database by prompting the user to enter the title, author and subject matter for a particular document.

A problem which exists with known contextual search engines is the fact that no means exist for invoking a contextual search engine upon the copying of a data object into a library facility from another location within a data processing system so that the data object may be subsequently contextually searched.

## SUMMARY OF THE INVENTION

It is therefore one object of the present invention to provide an improved data processing system.

It is another object of the present invention to provide an improved data processing system which permits the contextual searching of data objects.

It is another object of the present invention to provide an improved data processing system which permits the contextual searching of data objects which have been copied into a library facility from another location within a data processing system.

The foregoing objects are achieved as is now described. A selected data object is identified and the requirement for contextual searchability is indicated. Thereafter, a plurality of contextual search indices is automatically created in response to the copying of the selected data object into a library service. In the preferred embodiment of the present invention a user may specify a selected contextual data abstracting program, the location of that program, the particular input parameters to be utilized to control the contextual data abstracting program and the storage location for the subsequently generated contextual indices. These features are then automatically invoked as a result of the copying of the selected data object. In this manner a data object copied into a library facility will be contextually searchable in the same manner as objects originally filed therein.

The above as well as additional objects, features, and advantages of the invention will become apparent in the following detailed description.

## BRIEF DESCRIPTION OF THE DRAWING

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Figure 1 is a pictorial representation of a distributed data processing system which may be utilized to implement the method of the present invention;

Figure 2 is a pictorial representation of selected elements of the data processing system of Figure 1 which may be utilized to implement the method of the present invention; and

Figure 3 is a high level flowchart depicting the steps of the method of the present invention.

## DETAILED DESCRIPTION OF THE INVENTION

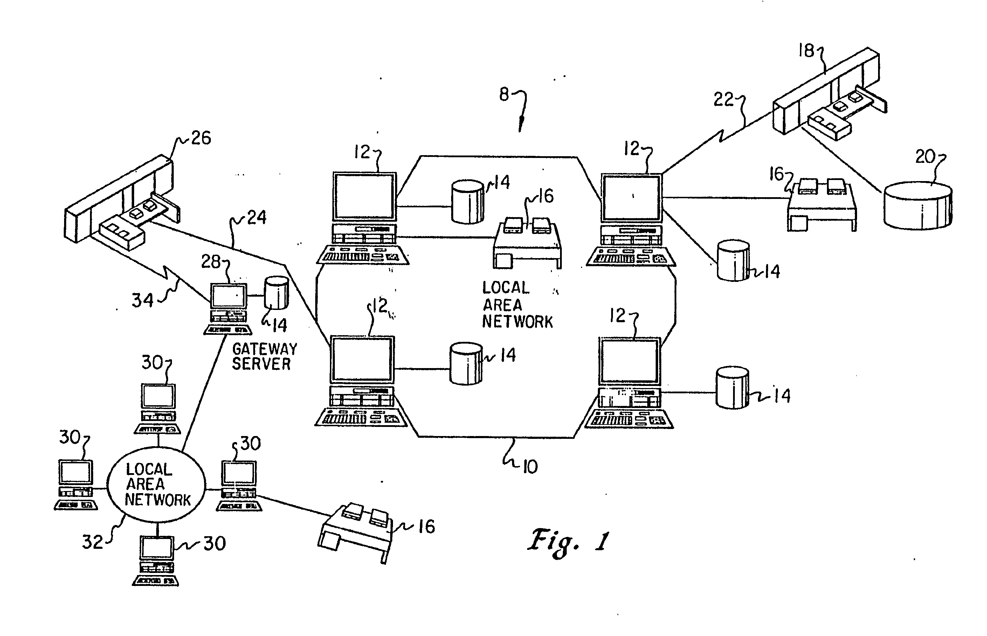

With reference now to the figures and in particular with reference to Figure 1, there is depicted a pictorial representation of a data processing system 8 which may be utilized to implement the method of the present invention. As may be seen, data processing system 8 may include a plurality of networks, such as Local Area Networks (LAN) 10 and 32, each of which preferably includes a plurality of individual computers 12 and 30, respectively. Of course, those skilled in the art will appreciate that a plurality of Intelligent Work Stations (IWS) coupled to a host processor may be utilized for each such network.

As is common is such data processing systems, each individual computer may be coupled to a storage device 14 and/or a printer/output device 16. One or more such storage devices 14 may be utilized, in accordance with the method of the present invention, to store the various data processing procedures or documents which may be periodically accessed and processed by a user within data processing system 8, in accordance with the method of the present invention. In a manner well known in the prior art, each such data processing procedure or document may be stored within a storage device 14 which is associated with a Resource Manager or Library Service, which is responsible for maintaining and updating all resource objects associated therewith.

Still referring to Figure 1, it may be seen that data processing network 8 may also include multiple mainframe computers, such as mainframe computer 18, which may be preferably coupled to Local Area Network (LAN) 10 by means of communications link 22. Mainframe computer 18 may also be coupled to a storage device 20 which may serve as remote storage for Local Area Network (LAN) 10 may be coupled via communications controller 27 and communications link 34 to a gateway server 28. Gateway server 28 is preferably an individual computer or Intelligent Work Station (IWS) which serves to link Local Area Network (LAN) 32 to Local Area Network (LAN) 10.

As discussed above with respect to Local Area Network (LAN) 32 and Local Area Network (LAN) 10, a plurality of data processing procedures or documents may be stored within storage device 20 and controlled by mainframe computer 18, as Resource Manager or Library Service for the data processing procedures and documents thus stored. Of course, those skilled in the art will appreciate that mainframe computer 18 may be located a great geographical distance from Local Area Network (LAN) 10 and similarly Local Area Network (LAN) 10 may be located a substantial distance from Local Area Network (LAN) 32. That is, Local Area Network (LAN) 32 may be located in California while Local Area Network (LAN) 10 may be located within Texas and mainframe computer 18 may be located in New York.

As will be appreciated upon reference to the foregoing it is often desirable for a user within one portion of distributed data processing network 8 to transfer a document stored in one portion of data processing network 8 into a second portion of data processing network 8. This is, as those skilled in the art will appreciate, a relatively simple operation generally referred to as a "COPY" operation wherein the document from one location within data processing network 8 may be copied identically into a second location of data processing network 8. However, in those instances in which the desired document is to be copied into a library service which the user has embodied with a contextual search capability, the creation of contextual search indices for the newly copied document is a time consuming and inefficient process. Therefore, it would be helpful to provide a method whereby a plurality of contextual search indices are automatically created in response to the copying of a document from one location within data processing network 8 into a library surface or other resource manager service which supports contextual searching capability.

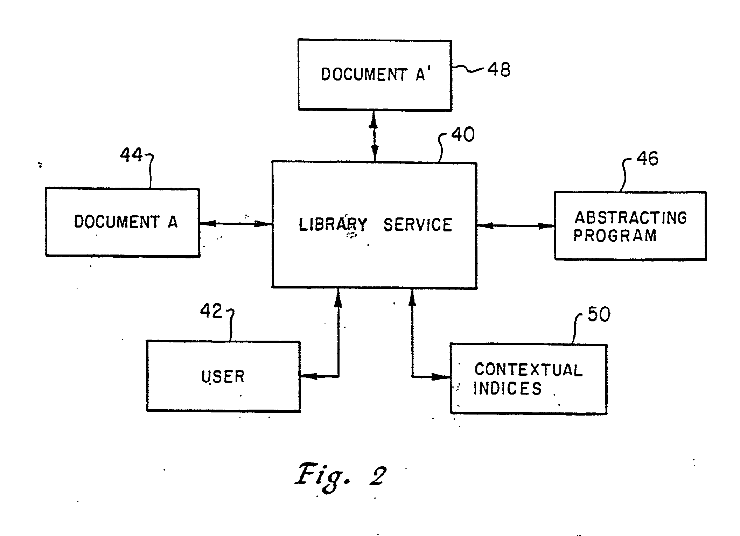

Referring now to Figure 2, there is depicted a pictorial representation of selected elements of data processing network 8 of Figure 1 which may be utilized to implement the method of the present invention. As is illustrated, a library service 40 is depicted which is utilized to maintain and update all resource objects or documents associated therewith. A user 42 may, through library service 40, indicate his or her desire to copy document A 44 into library service 40 for future utilization by user 42.

In accordance with the method of the present invention and in a manner which will be explained in greater detail herein, user 42 may specify that he or she desires to create a plurality of contextual indices for document A which will permit the searchability of that document upon its being copied into library service 40. As will be described in greater detail below, user 42 may, upon indicating a desire to copy document A, also indicate the name and location of an abstracting program 46 which should be utilized by library service 40 to create a plurality of contextual indices for document A. Similarly, user 42 may also specify a memory location 50 wherein the contextual indices for this document will be stored. Thereafter, library service 40 will copy document A, thereby creating document A' 48. During the process of copying document A, library service 40, in accordance with the method of the present invention, will automatically invoke abstracting program 46 and pass all relevant information to the contextual engine contained therein.

In this manner a new document, document A' 48 is created, and a plurality of contextual indices is simultaneously created and stored at memory location 50, in accordance with the desires of user 42.

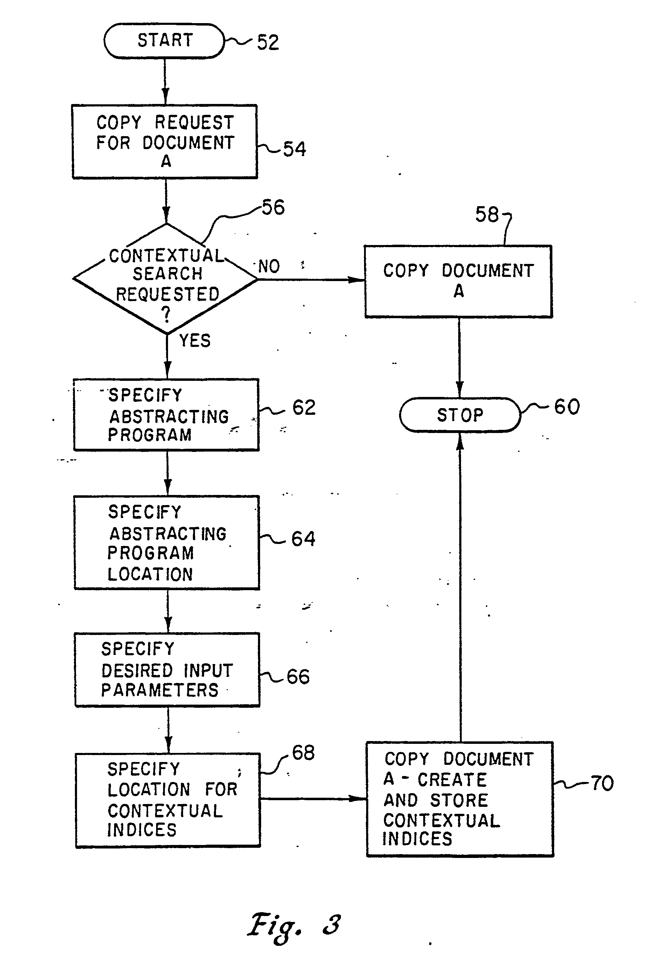

With reference now to Figure 3 there is depicted a high level flowchart which illustrates the steps of the method of the present invention. As is illustrated, the process begins at block 52 and thereafter passes to block 54 wherein a copy request for document A has been received by library service 40 (see Figure 2).

Next, block 56 is utilized to illustrate a determination of whether or not the user in question has requested that the newly copied document be contextually searchable. If not, the process passes to block 58 which illustrates the copying of document A. Thereafter, the process terminates, as illustrated in block 60.

Referring again to block 56, in the event the user in question has specified that contextual searchability of document A is desired, block 62 illustrates the specification of the contextual data abstracting program which is to be utilized to create the contextual indices which will permit the subsequent contextual searching of document A. Of course, those skilled in the art will appreciate that this step, as well as those following, may be implemented in any suitable manner. For example, the system may prompt the user to enter the selected information, after the user has indicated that contextual searchability is desired. Next, as illustrated in block 64, the location of the specified abstracting program is entered. Similarly, as illustrated in block 66, the user may be prompted to specify desired input parameters which will be utilized to control the abstracting program.

Finally, as illustrated in block 68 the storage location for the contextual indices which will be created is specified by the user so that subsequent contextual searching may be directed at these indices. Thereafter, as illustrated in block 70, the library service in question will copy the specified document and automatically create and store contextual indices in accordance with these features input by the user, after he or she has specified that contextual searchability is required for the copied document. After creating a copy of document A and creating and storing appropriate contextual indices, the process again passes to block 60 and terminates.

Upon reference to the foregoing those skilled in the art will appreciate that the Applicant in the present invention has created a method whereby documents located in one portion of a distributed data processing system may be rapidly and efficiently copied into a library service at another location within the data processing system and wherein contextual indices for the newly copied document may be automatically created in response to the copying of the document. In this manner, documents copied into a library service will be fully contextually searchable in a manner similar to documents which were originally filed within the library service.

Although the invention has been described with reference to a specific embodiment, this description is not meant to be construed in a limiting sense. Various modifications of the disclosed embodiment as well as alternative embodiments of the invention will become apparent to persons skilled in the art upon reference to the description of the invention. It is therefore contemplated that the appended claims will cover any such modifications or embodiments that fall within the true scope of the invention.

## Claims

1. A method in a data processing system having a plurality of data objects stored therein, for permitting a contextual search of a selected data object copied into a library facility within said data processing system, said method comprising the steps of:

identifying a selected data object to be copied into a library facility within said data processing system for which contextual searchability is desired; and

automatically creating a plurality of contextual search indices for said selected data object in response to the copying of said selected data object into said library facility.

2. The method in a data processing system having a plurality of data objects stored therein, for permitting a contextual search of a selected data object copied into a library facility within said data processing according to Claim 1 wherein said step of identifying a selected data object to be copied into a library facility within said data processing system for which contextual searchability is desired further includes the step of specifying a contextual data abstracting program to be invoked to create said plurality of contextual search indices in response to the copying of said selected data object into said library facility.

3. The method in a data processing system having a plurality of data objects stored therein, for permitting a contextual search of a selected data object copied into a library facility within said data processing according to Claim 2 wherein said step of identifying a selected data object to be copied into a library facility within said data processing system for which contextual searchability is desired further includes the step of specifying a location within said data processing system wherein said contextual data abstracting program resides.

4. The method in a data processing system having a plurality of data objects stored therein, for permitting a contextual search of a selected data object copied into a library facility within said data processing according to Claim 2 wherein said step of identifying a selected data object to be copied into a library facility within said data processing system for which contextual searchability is desired further includes the step of specifying selected input parameters to be communicated to said contextual data abstracting program wherein said input parameters may be utilized to control selected options within said contextual data abstracting program.

5. The method in a data processing system having a plurality of data objects stored therein, for permitting a contextual search of a selected data object copied into a library facility within said data processing according to Claim 2 wherein said step of identifying a selected data object to be copied into a library facility within said data processing system for which contextual searchability is desired further includes the step of specifying a storage location within said data processing system for storing said plurality of contextual search indices.

Fig. 1

*Fig. 2*

START — 52

COPY REQUEST FOR DOCUMENT A — 54

CONTEXTUAL SEARCH REQUESTED ? — 56

NO → COPY DOCUMENT A — 58

YES

SPECIFY ABSTRACTING PROGRAM — 62

SPECIFY ABSTRACTING PROGRAM LOCATION — 64

SPECIFY DESIRED INPUT PARAMETERS — 66

SPECIFY LOCATION FOR CONTEXTUAL INDICES — 68

COPY DOCUMENT A - CREATE AND STORE CONTEXTUAL INDICES — 70

STOP — 60

Fig. 3